# EUROPEAN PATENT SPECIFICATION

(11) **EP 4 309 422 B1**
(45) Date of publication and mention of the grant of the patent: **29.04.2026**
(21) Application number: 23775219.1
(22) Date of filing: 15.03.2023
(51) Int. Cl.: H04W 40/24, H04W 76/12, H04W 76/18, H04W 28/02, H04W 76/22

(54) **SYSTEMS AND METHODS TO RE-EVALUATE USER EQUIPMENT ROUTE SELECTION POLICY RULES**
SYSTEME UND VERFAHREN ZUR ERNEUTEN BEWERTUNG VON RICHTLINIENREGELN ZUR AUSWAHL VON BENUTZERGERÄTENROUTEN
SYSTÈMES ET PROCÉDÉS POUR RÉÉVALUER DES RÈGLES DE POLITIQUE DE SÉLECTION D'ITINÉRAIRE D'ÉQUIPEMENT UTILISATEUR

(30) Priority: 21.03.2022 IN 202241015486; 20.02.2023 IN 202241015486
(43) Date of publication of application: 24.01.2024
(73) Proprietor: Samsung Electronics Co., Ltd., Suwon-si, Gyeonggi-do 16677 (KR)
(72) Inventor: HASHMI, Danish Ehsan, Suwon-si, Gyeonggi-do 16677 (KR); ROY, Koustav, Suwon-si, Gyeonggi-do 16677 (KR); GANDIKOTA, Jagadeesh, Suwon-si, Gyeonggi-do 16677 (KR); KUMAR, Lalith, Suwon-si, Gyeonggi-do 16677 (KR); SEN, Arijit, Suwon-si, Gyeonggi-do 16677 (KR)
(74) Representative: Gulde & Partner
(86) International application number: PCT/KR2023/003449
(87) International publication number: WO 2023/182721

(56) References cited:
- WO-A1-2021/046825
- US-A1- 2020 196 133
- US-A1- 2020 336 937
- US-A1- 2021 029 628
- US-A1- 2021 084 529
- US-A1- 2021 410 059
- US-A1- 2022 124 595
- MOTOROLA MOBILITY, LENOVO: "Applicable URSP is not optional for a UE", 3GPP DRAFT; C1-202615, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Online Meeting ;20200416 - 20200424, 23 April 2020 (2020-04-23), Mobile Competence Centre ; 650, route des Lucioles ; F-06921 Sophia-Antipolis Cedex ; France , XP051877942

## Description

### [Technical Field]

The present disclosure generally relates to wireless communication systems, and more specifically, relates to systems and methods to re-evaluate one or more user equipment route selection policy (URSP) rules associated with a user equipment (UE) in communication with a network entity.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

A user equipment (UE) may be configured with URSP rules when registered with a network through signaling message (signaled URSP) or pre-configured URSP in the USIM or MEUE uses the pre-configured URSP only if it does not have the signaled URSP rules. When application use the data, in order to send a PDU of an application, upper layers require information on the PDU session (e.g., PDU address) via which to send a PDU of an application this results in URSP evaluation.

The UE evaluates the URSP rules, except the default URSP rule, with a traffic descriptor (TD) matching the application information in increasing order of their precedence values, if any. If the traffic descriptor contains more than one traffic descriptor component type, each of a different type, all of them may be matched. If the traffic descriptor contains more than one traffic descriptor component of the same traffic descriptor component type, at least one of the traffic descriptor components of the same traffic descriptor component type may be matched with the application information.

The UE uses the URSP rules to at the time of establishment of packet data unit (PDU) sessions in order to select an appropriate route for traffic.

The UE may re-evaluate the URSP rules to check if the change of the association of an application of the UE to the PDU session is needed. The change in association may be needed in certain cases, such as, when:
- the UE non-access stratum (NAS) layer indicates that an existing PDU session used for routing traffic of an application based on a URSP rule is released;
- the URSP is updated by the policy control function (PCF);
- the UE NAS layer indicates that the UE performs an inter-system change from S1 mode to N1 mode;
- the UE NAS layer indicates that the UE is successfully registered in N1 mode over 3GPP access or non-3GPP access;
- the UE establishes or releases a connection to a wireless local area network (WLAN) access and transmission of a PDU of the application via non-3GPP access outside of a PDU session becomes available/unavailable;
- the allowed network slice selection assistance information (NSSAI) or the configured NSSAI is changed; or
- the local area data network (LADN) information is changed.

If the re-evaluation leads to a change of the association of an application to a PDU session, the UE may enforce such change immediately or when the UE returns to 5GMM-IDLE mode.

In a conventional URSP re-evaluation process, when the UE sends a PDU session establishment request and the request is rejected, the network may provide a back-off timer having an associated back-off timer value. To establish the PDU session, the UE evaluates other traffic descriptors (TDs) and route selection descriptor (RSDs) based on which another PDU session establishment request may be made. Once the PDU session establishment is successful, the application associated with the same URSP rules, and the UE may re-evaluate URSP rule based on the UE implementation (e.g., periodically). Further, when the back-off timer is expired, the UE does not re-evaluate the URSP rules. Thus, in scenarios where the PDU session is established based on a lower precedence (higher precedence value) route selection descriptor or lower precedence (higher precedence value) of URSP rules, the application of the UE may continue to use the lower precedence route selection descriptor or lower precedence URSP rules even though a higher precedence route selection descriptor or higher precedence may be available upon timer expiry.

As an example, the UE may try to establish PDU session based on RSD-1, however, the network may reject the session establishment with a back-off timer. The UE may try to establish PDU session based on RSD-2, which may be a lower precedence RSD as compared to RSD-1. In case the network accepts the session establishment, the PDU session may be established based on the lower precedence RSD-2 even though a higher precedence RSD-1 is available. This is because once the back-off timer expires, the UE does not re-evaluate the URSP rules.

Accordingly, when the back-off timer expires, the UE continues to use the same PDU session even though data session on better URSP (higher precedence) policies may be available. The UE may, in such cases, use lower priority parameters, such as, lower priority URSP rules and/or lower precedence route selection descriptors (RSD) even though the UE may be allowed to establish the PDU session on higher precedence URSP and/or higher priority RSD. In some cases, the PDU session may be established based on a default URSP rule even though higher priority URSP rules and/or RSDs are available.

Further, the quality of service for the application of the UE may be affected since a lower precedence URSP and/or RSD is being used for the PDU session. The application may not get special treatment when on the lower precedence RSD or on the default URSP. Moreover, in case the default URSP rule does not provide service to the application, then the application may not get any service at all.

Accordingly, there is a need to overcome the drawbacks discussed above. For instance, there is a need for method and systems that allow the UE to utilize high precedence URSP rules and/or high precedence RSD while re-evaluating URSP rules upon back-off timer expiry.

WO 2021/046825 A1 discloses methods for wireless communication, a terminal device and a network device. US 2021410059 A1 discloses multimedia priority service.

### [Disclosure of Invention]

### [Technical Problem]

The purpose of this application is to be able to solve at least one of the drawbacks of the prior art.

In case that the back off timer expired, PDU session established due to the PDU session rejection could continuously used even though data session on the better URSP policies may be available.

In case that the UE established a PDU session with the default traffic descriptor, default traffic descriptor does not provide service to the application.

### [Solution to Problem]

The present invention is defined by the appended set of claims.

In one embodiment, a method for re-evaluating one or more user equipment route selection policy (URSP) rules associated with a user equipment (UE) in communication with a network entity is disclosed. The method comprises receiving, at a user equipment non-access stratum (UE NAS) layer, a back-off timer from the network entity. The back-off timer is related to non-initiation of a packet data unit (PDU) session associated with an application within the UE. The method comprises initiating, by the UE, the PDU session associated with the application. The method comprises indicating, by the UE NAS layer, an expiry of the back-off timer. The method comprises, upon the expiry of the back-off timer, re-evaluating, by the UE, the one or more URSP rules to determine whether a change of association of the PDU session with the application is required.

In another embodiment, a system to re-evaluate one or more user equipment route selection policy (URSP) rules associated with a user equipment (UE) in communication with a network entity is disclosed. The system may include at least one processor configured to receive, at a user equipment non-access stratum (UE NAS) layer, a back-off timer from the network entity. The back-off timer is related to non-initiation of a packet data unit (PDU) session associated with an application within the UE. The at least one processor is configured to initiate, by the UE, the PDU session associated with the application. The at least one processor is configured to indicate, by the UE NAS layer, an expiry of the back-off timer. The at least one processor is configured to, upon the expiry of the back-off timer, re-evaluate, by the UE, the one or more URSP rules to determine whether a change of association of the PDU session with the application is required.

To further clarify the advantages and features of the present disclosure, a more particular description of the disclosure will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings.

### [Advantageous Effects of Invention]

Embodiments of the present disclosure provides methods and apparatus for re-evaluating USRP rules upon receiving indication of back off timer expiry.

Compared to the prior art, the application can be operated smoothly by making the UE follow the URSP rule based on higher priority.

### [Brief Description of Drawings]

These and other features, aspects, and advantages of the present disclosure will become better understood when the following detailed description is read with reference to the accompanying drawings in which like characters represent like parts throughout the drawings, wherein:
FIG. 1 illustrates a process flow depicting a method for re-evaluating one or more URSP rules associated with a UE in accordance with an embodiment of the present disclosure;
FIG. 2 illustrates schematically a block diagram of URSP rules stored at the UE in accordance with an embodiment of the present disclosure;
FIG. 3 illustrates a sequence diagram depicting an exemplary embodiment of a URSP re-evaluation process performed by a UE in accordance with an embodiment of the present disclosure;
FIG. 4 illustrates a process flow depicting a method for re-evaluating one or more URSP rules associated with a UE in accordance with another embodiment of the present disclosure;
FIG. 5 illustrates a sequence diagram depicting an exemplary embodiment of a URSP re-evaluation process performed by a UE in accordance with another embodiment of the present disclosure;
FIG. 6 illustrates exemplary diagram of a network node according to an embodiment of the present disclosure; and
FIG. 7 illustrates exemplary configuration of a user equipment according to an embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present disclosure. Furthermore, in terms of the construction of the device, one or more components of the device may have been represented in the drawings by conventional symbols, and the drawings may show only those specific details that are pertinent to understanding the embodiments of the present disclosure so as not to obscure the drawings with details that will be readily apparent to those of ordinary skill in the art having the benefit of the description herein.

### [Mode for the Invention]

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

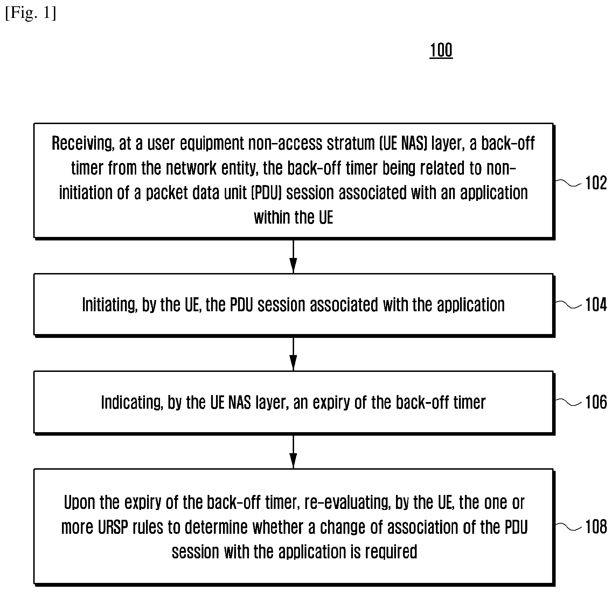

FIGS. 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

For the purpose of promoting an understanding of the principles of the disclosure, reference will now be made to the embodiment illustrated in the drawings and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as may normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect," "another aspect" or similar language means that a particular feature, structure, or characteristic described in connection with the embodiment is included in at least one embodiment of the present disclosure. Thus, appearances of the phrase "in an embodiment," "in another embodiment" and similar language throughout this specification may, but do not necessarily, all refer to the same embodiment.

The terms "comprises," "comprising," or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The present disclosure provides methods and systems for re-evaluating one or more user equipment route selection policy (URSP) rules associated with a user equipment (UE). The UE may re-evaluate the URSP rules in order to check if a change of association of an application of the UE to a packet data unit (PDU) session is needed.

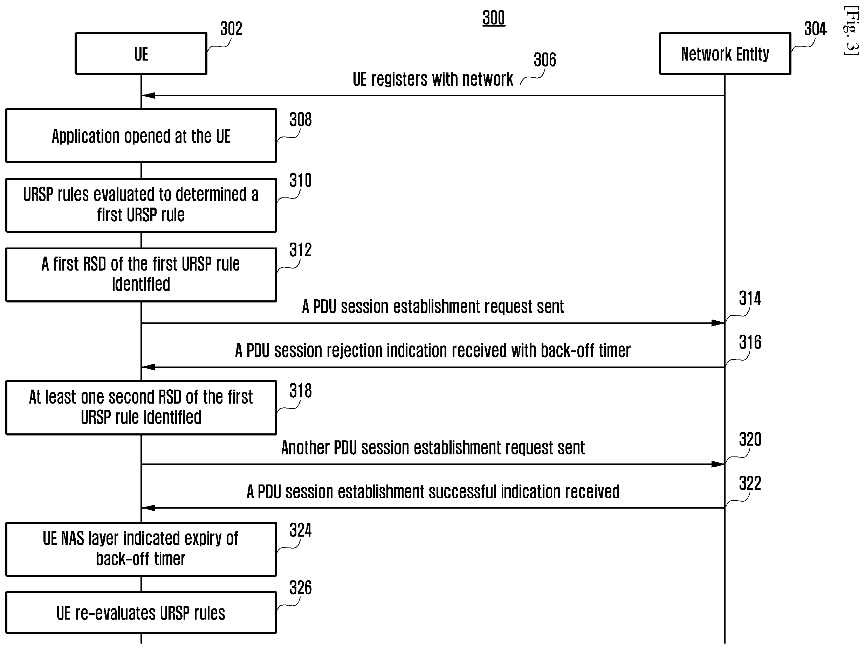

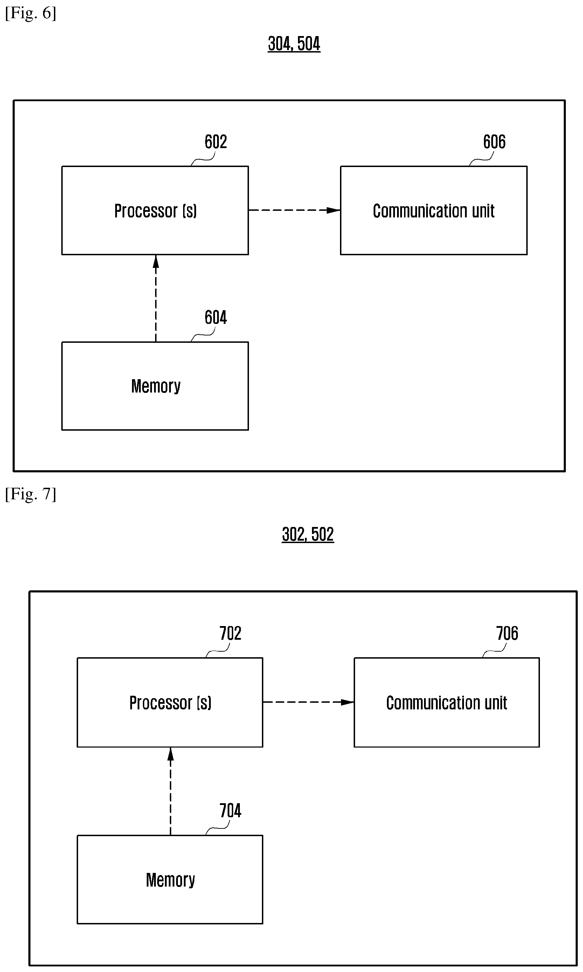

FIG. 1 illustrates a process flow depicting a method 100 for re-evaluating one or more URSP rules associated with a UE in accordance with an embodiment of the present disclosure. The method 100 may be performed by the UE. The UE and its associated functions along with architecture is explained in conjunction with at least FIGS. 3 and 7. The UE may include, but not limited to, a mobile phone, a smart watch, a tablet, and any other electronic device which is capable of connecting to a 4G and/or 5G network.

The UE may be in communication with a network entity within a network. The network entity and its associated functions along with architecture is explained in conjunction with at least FIGS. 3 and 6. In some embodiments, the network entity may be a network node in a 5G network, such as a 5G core network (5GC). In some embodiments, the 5GC may include, but not limited to, access and mobility function (AMF), session management function (SMF), or any network function (NF) etc.

The one or more URSP rules may be used by the UE to determine how traffic associated with the UE may be routed. The traffic may be generated, for instance, by an application associated with the UE. In some embodiments, the traffic may be routed to an established PDU session or may trigger establishment of a new PDU session.

At step 102, a back-off timer is received at a UE NAS layer from the network entity. The back-off timer relates to non-initiation of a PDU session associated with an application of the UE. In some embodiments, the back-off timer may be received with an NAS message at the UE NAS layer from the network entity. The back-off timer may be associated with a pre-determined time period or a back-off timer value based on which the UE may re-evaluate the URSP rules and determine whether a change in association between the application and the PDU session is required. In some embodiments, the back-off timer may be received when a request for PDU session establishment is rejected by the network entity, as will be described further below. In some embodiments, the request for PDU session establishment may be rejected due to network congestion or insufficient resources, insufficient resources for specific slice and DNN, insufficient resources for specific slice, unknown PDU session type or any other reject with associated backoff timer. In another example, the request for PDU session establishment may be rejected due to following conditions:
#28 "unknown PDU session type," #39 "reactivation requested," #46 "out of LADN service area," #50 "PDU session type IPv4 only allowed," #51 "PDU session type IPv6 only allowed," #54 "PDU session does not exist," #57 "PDU session type IPv4v6 only allowed," #58 "PDU session type unstructured only allowed," #61 "PDU session type Ethernet only allowed," or #68 "not supported SSC mode."

At step 104, the PDU session associated with the application of the UE is initiated by the UE. The PDU session may be initiated based on a URSP rule of the one or more URSP rules wherein application information matches with the traffic descriptor. In some embodiments, the PDU session establishment request may be initiated with the attribute of the RSD of the matched URSP rule in increasing order of precedence value if PDU session is not already established. Default URSP rule has the least precedence and if UE is not able to match any non-default URSP rule with application attributes, application data is routed through the PDU session established on the default URSP rule.

In some embodiments, the one or more URSP rules may be stored at the UE. Each of the one or more URSP rules may have a precedence value, and each of the one or more URSP rules may be associated with at least one traffic descriptor. The higher the value of the precedence value associated with URSP rule, the lower the precedence of the URPS rule. For example, URSP rule with the precedence value of 1 has higher precedence than a URSP rule with the precedence value of 2. Further, each of the one or more URSP rules may be associated with at least one route selection descriptor with precedence value.

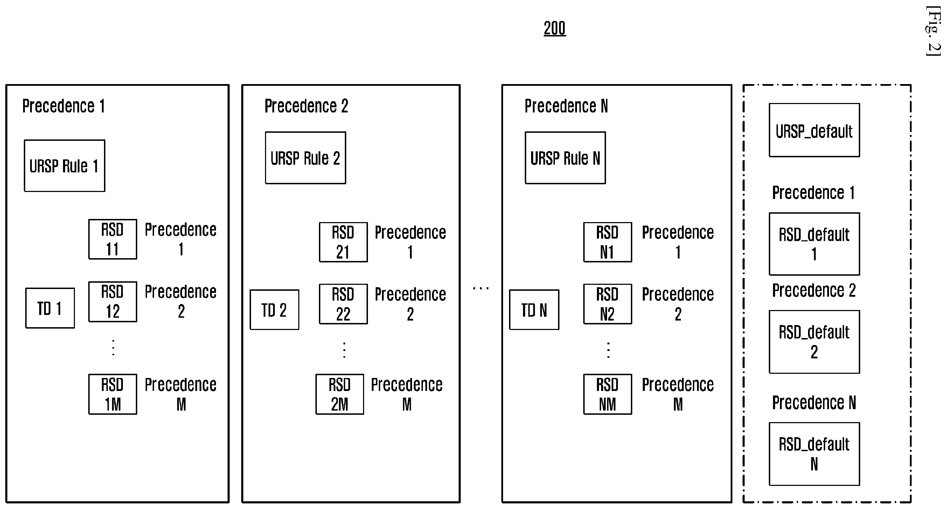

Reference is made to FIG. 2 which illustrates schematically a block diagram of URSP rules 200 stored at the UE. As seen in FIG. 2, URSP rule 1, URSP rule 2, ... URSP rule N may be stored at the UE. In some embodiments, the one or more URSP rules may be configured by an operator associated with the network. Each of the one or more URSP rules are associated with a precedence value, i.e., URSP rule 1 may have a precedence 1, URSP rule 2 may have a precedence 2, URSP rule N may have a precedence value N, and the like. The precedence value associated with the one or more URSP rules allows identification of the precedence of the corresponding URSP rule among all of the one or more URSP rules.

Each of the one or more URSP rules may be associated with at least one traffic descriptor TD. As seen in FIG. 2, URSP rule 1 is associated with traffic descriptor TD 1, URSP rule 2 is associated with traffic descriptor TD 2, URSP rule N is associated with traffic descriptor TD N, and the like. It is appreciated that although one traffic descriptor is depicted in FIG. 1, there may be a plurality of traffic descriptors, each having a corresponding precedence value. In some embodiments, the at least one TD associated with the corresponding one or more URSP rules may comprise one or more application identifiers, one or more IP 3-tuples, i.e., destination IP address, destination port number, and protocol in use above the IP, one or more non-IP descriptors, i.e., destination information of non-IP traffic, one or more data network names (DNNs), one or more connection capabilities, and/or one or more domain descriptors, i.e., destination fully qualified domain name (FQDNs) or a regular expression as a domain name matching criteria.

Each of the one or more URSP rules may be associated with corresponding route selection descriptors RSD. As seen in FIG. 2, URSP rule 1 is associated with corresponding route selection descriptors RSD 11, RSD 12, ... RSD 1M, URSP rule 2 is associated with RSD 21, RSD 22, ... RSD 2M, URSP rule N is associated with RSD N1, RSD N2, ... RSD NM, and the like. Each of the RSDs may be associated with corresponding URSP rule is associated with a precedence value that allows identification of the precedence of an RSD among all of the RSDs associated with the corresponding URSP rule. The higher the value of the precedence value for the RSD, lower is the precedence of the RSD. For instance, as seen in FIG. 2 for URSP rule 1, RSD 11 may have a precedence 1, RSD 12 may have a precedence 2, RSD 1M may have a precedence M, and the like. Each RSD may have attribute required which is required to initiate PDU session establishment request (e.g., PDU session type, one or more DNN, one or more S-NSSAI, SSC mode etc.). These attributes are used in the PDU connection establishment request.

In some embodiments, each of the RSDs may comprise a PDU session type, session and service continuity (SSC) mode, one or more single network slice selection assistance Information (S-NSSAIs), one or more data network names (DNNs), void, preferred access type, multi-access preference, a time window, location criteria, PDU session pair ID, and/or redundancy sequence number (RSN). In some embodiments, the RSDs may comprise non-seamless non-3GPP offload indication. In some embodiments, the RSD may comprise 5G ProSe layer-3 UE-to-network relay offload indication.

In some embodiments, the UE is associated with an application and the PDU session may be initiated for the application. Application information related to the application may be received, the application being an application of the UE for which the PDU session is to be initiated with the network entity. In some embodiments, the application information may be generated by the application once the application is opened in the UE. The application information may be application identifier, IP tuples (i.e., the destination IP address, the destination port number, and the protocol in use above the IP) etc.

In some embodiments, the one or more URSP rules are evaluated to determine a first URSP rule for initiating the PDU session associated with the application. As described above, each of the one or more URSP rules have a precedence value, and further, each of the route selection descriptors within a corresponding URSP rule also have a respective precedence value. In order to determine the first URSP value, the one or more URSP rules are evaluated in an increasing order of the associated precedence value.

A selection process may be performed to determine the first URSP rule from the one or more URSP rules. The selection process may comprise selecting one URSP rule from the one or more URSP rules. The selection may be based on the precedence value, in that, URSP rule having a higher precedence value may be selected prior to URSP rule having a lower precedence value. Further, the application information received from the application of the UE may be compared with the corresponding TD of the selected URSP rule. In case the TD of the selected URSP rule matches with the one or more or all application information, the selected one URSP rule is determined as the first URSP rule.

In case the TD of the selected URSP rule does not match with the application information, the selection process may be repeated with the remaining of the one or more URSP rules in increasing order of the corresponding precedence values, in order to determine the first URSP rule. For instance, the selection process may comprise selecting another URSP rule from the remaining one or more URSP rules. The selection of the other URSP rule may be based on the precedence value. The one or more application information received from the application of the UE may be compared with the corresponding TD of the selected another URSP rule. In case the TD of the selected URSP rule matches with the one or more application information, the selected another URSP rule is determined as the first URSP rule. In case the TD of the selected another URSP rule does not match with the application information, the selection process may be repeated again with the remaining of the one or more URSP rules till the first URSP rule is determined.

As an example, URSP rule 1 may have a higher precedence than URSP rule 2 and the TD 1 of the URSP rule 1 may match with the application information. In such a case, the URSP rule 1 may be determined as the first URSP rule. As another example, URSP rule 1 may have a higher precedence than URSP rule 2 which in turn may have a higher presence than URSP rule 3. The TD 1 of the URSP rule 1 may not match with the application information. Thereafter, the URSP rule 2 is evaluated prior to URSP rule 3 due to the associated precedence values. The TD 2 of the URSP rule 2 may match with the application information. In such a case, the URSP rule 2 may be determined as the first URSP rule.

In some embodiments, once the first URSP rule is determined, a PDU session establishment request may be sent to the network entity. The PDU session establishment request may be sent based on a first route selection descriptor RSD of the first URSP rule (i.e., RSD with higher precedence in the same URSP rule). As described above, each of the one or more URSP rules may comprise one or more RSDs, each having an associated precedence value. The PDU session establishment request may be sent based on a first RSD of the first URSP.

In some embodiments, a PDU session reject indication may be received from the network entity. The PDU session reject indication may be received from the network entity in response to receiving the PDU session establishment request. In some embodiments, the request for PDU session establishment may be rejected and network provide back-off timer. In some embodiments, the back-off timer may be sent to the UE along with the PDU session reject indication or PDU session release command or PDU session release command or any other downlink NAS message. As the PDU session has not been established, another PDU session establishment request may be sent to the network entity. Another PDU session establishment request may be based on availability of at least one second RSD if available of the first URSP, in that, the UE may evaluate the RSDs and identify the at least one second RSD.

The at least one second RSD may have a lower precedence value as compared to the first RSD. Accordingly, the PDU session establishment request was first sent on the basis of the first RSD (higher precedence value), and as the establishment could not occur, the other PDU session establishment request was then sent on the basis of the at least one second RSD (lower precedence value). In some embodiments, the first RSD has a higher precedence value as compared to each of the at least one second RSD, in the case where the first URSP is associated with multiple RSDs other than the first RSD. If second RSD is not available in the URSP rule, UE re-evaluates another URSP rule with lower precedence.

Upon sending the other PDU session establishment request, a PDU session establishment successful indication may be received from the network entity, the PDU session establishment successful indication being indicative of a successful establishment of the PDU session. In some embodiments, the PDU session establishment successful indication may further comprise attributes of the established PDU session. The attributes may comprise, for example, an IP address, session and service continuity mode (ssc mode), data network name (DNN), ingle - network slice selection assistance information(S-NSSAI). Accordingly, the PDU session is established based on the at least one second RSD, as the PDU session establishment request based on the first RSD was rejected.

In some embodiments, each of the one or more URSP rules may have a plurality of traffic descriptors and a plurality of route selection descriptors corresponding to the plurality of traffic descriptors. For instance, URSP rule 1 may comprise traffic descriptors TD 11, TD 12, ... TD 1N, and the like. Further, URSP rule 1 may comprise route selection descriptors RSD 11, RSD 12, ... RSD 1N, and the like corresponding to each of the plurality of traffic descriptors. Further, each of the URSP rules and RSDs may be associated with corresponding precedence values. In such a scenario, during evaluation of the one or more URSP rules to identify the first URSP rule, the traffic descriptors may be matched with the application information based on associated precedence values. That is, first, the TD 11 of the URSP rule 1 may be compared with the application information and the TD 11 to match with the application information. if TD11 does not match with the TD 12 may be selected and matched with application information, if TD12 is matched which belongs to URSP rule 1 then and the route selection descriptors of the URSP rule 1 is e checked and a PDU session may be initiated with the attributes of the available RSDs.

In some embodiments, each of the one or more URSP rules may have a plurality of traffic descriptors. For instance, URSP rule 1 may be traffic descriptors TD 11, TD 12, ... TD 1N, and the like.

In some embodiments, a URSP default rule may be configured, the URSP default rule comprising one or more RSD each having an associated precedence value. For instance, as seen in FIG. 2, the URSP_default is the URSP default rule having one or more RSDs as RSD_default 1, RSD_default 2, ... RSD_default N, each having an associated precedence value. The URSP default rule may be selected as the first URSP rule in case during evaluation of the one or more URSP rules, the one or more application information does not match with the traffic descriptors of any of the one or more URSP rules with higher precedence.

Referring again to FIG. 1, at step 106, an expiry of the back-off timer is indicated by the UE NAS layer. As described above, the back-off timer may be associated with a back-off timer value, i.e., a pre-determined time period and the back-off timer may expire once the pre-determined time period has elapsed. In some embodiments, the expiry of the back-off timer may be indicated by the UE NAS layer to a URSP layer or upper layers.

In some embodiments, the back-off timer refers to back-off timer T3396, T3584 or T35585 (as illustrated in 3GPP TS 24.501).

In some embodiments, the back-off timer refers to a timer that does not allow the UE to establish the PDU session while the timer is running (prior to expiry), and further, after expiration of the timer, the UE is allowed to establish the PDU session.

In some embodiments, the back-off timer may be received from the network entity in an information element (IE).

In some embodiments, the back-off timer may refer to one or more of:
- IE if the 5GSM cause is not #28 "unknown PDU session type," #39 "reactivation requested," #46 "out of LADN service area," #50 "PDU session type IPv4 only allowed," #51 "PDU session type IPv6 only allowed," #54 "PDU session does not exist," #57 "PDU session type IPv4v6 only allowed," #58 "PDU session type Unstructured only allowed," #61 "PDU session type Ethernet only allowed," or #68 "not supported SSC mode," to request a minimum time interval before procedure retry is allowed;
- T3396 in the back-off timer value IE or depending on the Back-off timer value received from the 5GMM sublayer;
- 26 "insufficient resources" and the Back-off timer value IE included in a PDU SESSION ESTABLISHMENT REJECT message;
- A back-off timer received along with the Re-attempt indicator IE provided by the network;
- 5GSM cause value #67 "insufficient resources for specific slice and DNN" and the Back-off timer value IE are included in the PDU SESSION ESTABLISHMENT REJECT message;
- Timer T3584 in the Back-off timer value IE or depending on the Back-off timer value received from the 5GMM sublayer;
- 5GSM cause value #69 "insufficient resources for specific slice" and the Back-off timer value IE are included in the PDU SESSION ESTABLISHMENT REJECT message; and
- Timer value received for timer T3585 in the Back-off timer value IE or depending on the back-off timer value received from the 5GMM sublayer.

In the embodiment, the UE receives back off timer in the PDU session establishment reject, PDU session release command, PDU session establishment reject. NAS layer start timer with a back-off timer value received.

At step 108, the one or more URSP rules are re-evaluated by the UE, upon the expiry of the back-off timer indicated by NAS layer, to determine whether a change of association of the PDU session with the application of the UE is required. In other words, re-evaluation of URSP rules is initiated upon expiry of the back-off timer. The UE may re-evaluate the URSP rules to check if the change of the association of an application to a PDU session is needed when the UE NAS layer indicates that back-off timer has stopped or expired.

In some embodiments, re-evaluating the one or more URSP rules comprises sending another PDU session establishment request to the network entity, the other PDU session establishment request being based on the first RSD of the first URSP rule. As described above, the PDU session was established based on the at least one second RSD that has a lower precedence value as compared to the first RSD. Upon expiry of the back-off timer, the other PDU session establishment request is sent in order to establish the PDU session based on the first RSD having a higher precedence value.

Further, after another PDU session establishment request based on the first RSD is sent, an indication may be received from the network entity indicating result of the PDU session establishment. That is, the received indication may indicate information related to successful establishment of the PDU session based on the first RSD. Accordingly, upon URSP re-evaluation, in case where the UE is able to establish PDU session on the higher precedence RSD, application data may be moved to PDU session established with attributes of the higher precedence RSD.

As a result, an RSD having a higher precedence can be utilized for the PDU session even after a PDU session was established based on an RSD with lower precedence level. In other words, upon expiry of the back-off timer, re-evaluation of the URSP rules allows a PDU session to be established based on RSD having a higher precedence of URSP rules with higher precedence of RSD. Further, a better quality of service may be achieved by use of the higher precedence RSD. For instance, the application of the UE may get special treatment when on the higher precedence URSP rules and/or RSD as compared to when to lower precedence URSP rules and/or RSD or default URSP.

As an example, with reference to FIGS. 1-2, URSP rule 1 may have a higher precedence than URSP rule 2 and the TD 1 of the URSP rule 1 may match with the application information. In such a case, the URSP rule 1 may be determined as the first URSP rule. Further, for PDU session establishment, a PDU session establishment request may be sent based on RSD 11 of the URSP rule 1. The PDU session may not be established and a back-off timer may be received at the UE NAS layer. Further, another PDU session established request may be sent based on RSD 12 of the URSP rule 1. The PDU session then may be established related to the RSD 12 of the URSP rule 1. In this case, RSD 11 may have a higher precedence than RSD 12. Upon expiry of the back-off timer, the one or more URSP rules may be re-evaluated. During re-evaluation, the URSP rule 1 may be selected due to the URSP rule 1 having a higher precedence and also having the TD 1 matching with the application information. Further, another PDU session established request may be sent based on RSD 11 of the URSP rule 1, RSD 11 having a higher precedence than RSD 12. In response to the other PDU session establishment request based on RSD 11 of the URSP rule 1, the PDU session may be established and application start using this PDU session.

Reference is made to FIG. 3 that illustrates a sequence diagram 300 depicting an exemplary embodiment of a URSP re-evaluation process performed by a UE 302 in communication with a network entity 304 within a network. The UE 302 may be similar in functionalities to the UE detailed above and the network entity 304 may be similar in functionalities to the network entity detailed above.

At step 306, the UE 302 may register with the network by means of the network entity 304.

At step 308, an application is opened at the UE 302, the application at the UE 302 requiring data communication with the network entity 304.

At step 310, the one or more URSP rules are evaluated by the UE 302. The one or more URSP rules are evaluated to determine a first URSP rule for initiating a PDU session with the network entity 304. As described above, the first URSP rule may be determined based on the associated precedence values and based on the traffic descriptors and route selection descriptors of the one or more URSP rule. The determination of the first URSP rule is detailed with reference to FIGS. 1-2.

At step 312, the UE identifies a first RSD of the determined first URSP rule based on which the PDU session may be established.

At step 314, the UE 302 sends a PDU session establishment request based on a first RSD of the determined first URSP rule.

At step 316, the UE 302 receives a PDU session reject indication from the network entity 304 along with a back-off timer value. The PDU session reject indication indicates that the PDU session is not established.

At step 318, the UE 302 identifies at least one second RSD of the determined first URSP rule based on which the PDU session may be established. The at least one second RSD may be a lower precedence value as compared to the first RSD of the determined first URSP rule.

At step 320, the UE 302 sends another PDU session establishment request based on at least one second RSD of the determined first URSP rule.

At step 322, the UE 302 receives a PDU session establishment successful indication from the network entity 304. The PDU session establishment successful indication indicates successful establishment of the PDU session.

At step 324, the UE NAS layer indicates expiry of the back-off timer. The UE NAS layer may indicate the expiry of the back-off timer to the URSP layer or upper layer.

At step 326, the UE 302 re-evaluates the one or more URSP rule in accordance with the precedence values of the URSP rules and the precedence values of the associated traffic descriptors and route selection descriptors. Accordingly, the UE 302 may, post re-evaluation, establish a PDU session with a higher precedence RSD even after a PDU session was established based on an RSD with lower precedence level. Thus, re-evaluation of the one or more URSP rules may be done to determine whether a change of association of the PDU session with the application of the UE is required.

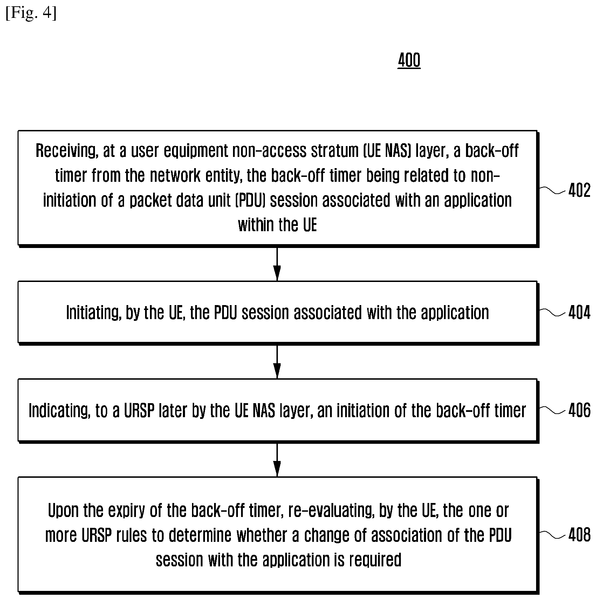

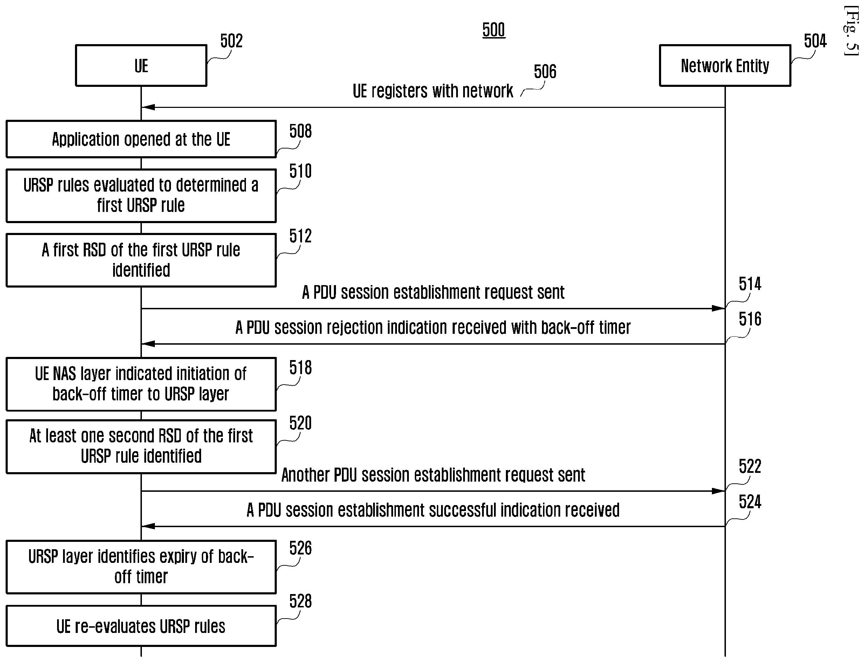

FIG. 4 illustrates a process flow depicting a method 400 for re-evaluating one or more URSP rules associated with a UE in accordance with embodiment of the present disclosure. The method 100 may be performed by the UE. The UE and its associated functions along with architecture is explained in conjunction with at least FIGS. 5 and 7. The UE may be in communication with a network entity within a network. The network entity and its associated functions along with architecture is explained in conjunction with at least FIGS. 5 and 6.

At step 402, a back-off timer is received at a UE NAS layer from the network entity. The back-off timer relates to non-initiation of a PDU session associated with an application of the UE. In some embodiments, the back-off timer may be received with a NAS message at the UE NAS layer from the network entity. The back-off timer may be associated with a pre-determined time period or a back-off timer value based on which the UE may re-evaluate the URSP rules and determine whether a change in association between the application and the PDU session is required. In some embodiments, the back-off timer may be received when a request for PDU session establishment is rejected by the network entity.

At step 404, the PDU session associated with the application of the UE is initiated by the UE. The PDU session may be initiated based on a URSP rule of the one or more URSP rules. In some embodiments, the PDU session may be initiated when a request for PDU session establishment is accepted by the network entity. In some embodiments, the request for PDU session establishment that is accepted by the network entity may be a request that is sent by the UE after the request for PDU session establishment that is rejected by the network entity.

In some embodiments, the UE is associated with an application and the PDU session may be initiated for the application. One or more application information related to the application may be received, the application being an application of the UE for which the PDU session is to be initiated with the network entity.

In some embodiments, the one or more URSP rules are evaluated, based on associated precedence values, to determine a first URSP rule for initiating the PDU session associated with the application. As described above with respect to FIGS. 1 and 2, the first URSP rule may be determined based on matching of application information with traffic descriptors of the first URSP rule and further based on the route selection descriptors associated with the first URSP rule. For instance, prior to initiation of the PDU session in step 404, a PDU session establishment request may be sent to the network entity. The PDU session establishment request may be sent based on a first route selection descriptor RSD of the first URSP rule. Further, a PDU session reject indication may be received from the network entity and a back-off timer may be received along with the PDU session reject indication, as mentioned with respect to step 402. The UE may re-evaluate the route selection descriptors and another PDU session establishment request may be sent to the network entity based on at least one second RSD of the first URSP. The at least one second RSD may have a lower precedence value as compared to the first RSD. Further, a PDU session establishment successful indication may be received from the network entity, the PDU session establishment successful indication being indicative of a successful establishment of the PDU session. Accordingly, the PDU session is established based on the at least one second RSD, as the PDU session establishment request based on the first RSD was rejected.

At step 406, the UE NAS layer indicates the initiation of the back-off timer to the URSP layer. As described above, the back-off timer may be received along with the PDU session reject indication. In some embodiments, the UE NAS layer may indicate to the URSP layer than a back-off timer is received and the URSP layer may start the timer and track the expiry of the timer. Thus, in the method of FIG. 4, the URSP layer itself tracks the expiry of the back-off timer as the UE NAS layer indicates that back-off timer being received. In some embodiments, the back-off timer refers to back-off timer T3396, T3584 or T35585 (as defined in 3GPP TS 24.501).

At step 408, the one or more URSP rules are re-evaluated by the UE, upon the expiry of the back-off timer, to determine whether a change of association of the PDU session with the application of the UE is required. In other words, re-evaluation of URSP rules is initiated upon expiry of the back-off timer, which is tracked by the URSP layer. The UE may re-evaluate the URSP rules to check if the change of the association of an application to a PDU session is needed when the back-off timer has stopped or expired.

In some embodiments, re-evaluating the one or more URSP rules may comprise sending another PDU session establishment request to the network entity, the other PDU session establishment request being based on the first RSD of the first URSP rule. As described above, the PDU session was established based on the at least one second RSD that has a lower precedence value as compared to the first RSD. Upon expiry of the back-off timer, the other PDU session establishment request is sent in order to establish the PDU session based on the first RSD having a higher precedence value.

As a result, an RSD having a higher precedence can be utilized for the PDU session even after a PDU session was established based on an RSD with lower precedence level. In other words, upon expiry of the back-off timer, re-evaluation of the URSP rules allows a PDU session to be established based on RSD having a higher precedence. Further, a better quality of service may be achieved by use of the higher precedence RSD. For instance, the application of the UE may get special treatment when on the higher precedence RSD as compared to when to lower precedence RSD or default RSD.

Reference is made to FIG. 5 that illustrates a sequence diagram 500 depicting another exemplary embodiment of a URSP re-evaluation process performed by a UE 502 in communication with a network entity 504 within a network. The UE 502 may be similar in functionalities to the UE detailed above with respect to FIG. 4 and the network entity 504 may be similar in functionalities to the network entity detailed above with respect to FIG. 4.

At step 506, the UE 502 may register with the network by means of the network entity 504.

At step 508, an application is opened at the UE 502, the application at the UE 502 requiring data communication with the network entity 504.

At step 510, the one or more URSP rules are evaluated by the UE 502. The one or more URSP rules are evaluated to determine a first URSP rule for initiating a PDU session with the network entity 504. As described above, the first URSP rule may be determined based on the associated precedence values and based on the traffic descriptors and route selection descriptors of the one or more URSP rule. The determination of the first URSP rule is detailed with reference to FIGS. 1, 2, and 4.

At step 512, the UE 502 identifies a first RSD of the determined first URSP rule based on which the PDU session may be established.

At step 514, the UE 502 sends a PDU session establishment request based on a first RSD of the determined first URSP rule.

At step 516, the UE 502 receives a PDU session reject indication from the network entity 504 along with a back-off timer. The PDU session reject indication indicates that the PDU session is not established.

At step 518, the UE NAS layer indicates initiation of the back-off timer to the URSP layer. The URSP layer tracks the back-off timer instead of the UE NAS layer.

At step 520, the UE 502 identifies at least one second RSD of the determined first URSP rule based on which the PDU session may be established. The at least one second RSD may be a lower precedence value as compared to the first RSD of the determined first URSP rule.

At step 522, the UE 502 sends another PDU session establishment request based on at least one second RSD of the determined first URSP rule.

At step 524, the UE 502 receives a PDU session establishment successful indication from the network entity 504. The PDU session establishment successful indication indicates successful establishment of the PDU session.

At step 526, the URSP layer identifies expiry of the back-off timer at the UE 502.

At step 528, the UE 502 re-evaluates the one or more URSP rule in accordance with the precedence values of the URSP rules and the precedence values of the associated traffic descriptors and route selection descriptors. Accordingly, the UE 502 may, post re-evaluation, establish a PDU session with a higher precedence RSD even after a PDU session was established based on an RSD with lower precedence level. Thus, re-evaluation of the one or more URSP rules may be done to determine whether a change of association of the PDU session with the application of the UE is required.

FIG. 6 illustrates exemplary diagram of a network entity 304, 504, according to an embodiment of the present disclosure. The network entity shown in FIG. 6 may be similar to the network entity 304 depicted in FIG. 3 and the network entity 504 depicted in FIG. 5, in that, the functionalities and methods related to the network entities 304, 504, as described with respect to FIGS. 1-5 above, may be performed by the network entity shown in FIG. 6. The network entity 304, 504 may correspond to a 5GC core network. The network entity 304, 504 may include at least one processor 602, a memory 604 (e.g., storage), and a communication unit 606 (e.g., communicator or communication interface). Further, the network entity 304, 504 may also include the cloud -RAN (C-RAN), a central Unit (CU), a core network (NW), a distributed unit (DU) or any other possible network (NW) entity of the 5GC core network. The communication unit 606 may perform one or more functions for transmitting and receiving signals via a wireless channel.

As an example, the processor 602 may be a single processing unit or a number of units, all of which could include multiple computing units. The processor 602 may be implemented as one or more microprocessors, microcomputers, microcontrollers, digital signal processors, central processing units, state machines, logic circuitries, and/or any devices that manipulate signals based on operational instructions. Among other capabilities, the processor 602 is configured to fetch and execute computer-readable instructions and data stored in the memory. The processor 602 may include one or a plurality of processors. At this time, one or a plurality of processors 602 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 602 may control the processing of the input data in accordance with a predefined operating rule or artificial intelligence (AI) model stored in the non-volatile memory and the volatile memory, i.e., memory unit 604. The predefined operating rule or artificial intelligence model is provided through training or learning.

The memory 604 may include, but not limited to, a non-transitory computer-readable storage media, such as, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

In one example, the memory 604 may include a cache or random-access memory for the processor 602. The memory 604 may further include a database to store data. In some embodiments, the memory 604 may include one or more modules comprising a set of instructions that may be executed to cause the network entity 304, 504 to perform any one or more of the methods/processes disclosed herein. The one or more modules may be configured to perform the steps of the present disclosure using the data stored in the database, to communicate with the secondary devices, as discussed herein. In an embodiment, each of the one or more modules may be a hardware unit which may be outside the memory 604. Hereinafter, it is understood that terms including "module" may correspond to a unit for processing performing at least one function or operation or method steps as discussed throughout the present disclosure. Further, the "module" may be implemented in hardware, software, or a combination of hardware and software.

In some embodiments, the memory 604 may be communicatively coupled to the at least one processor (or a controller) 602. The memory 604 may be configured to store data, instructions executable by the at least one processor 602. In one embodiment, the memory 604 may communicate via a bus within the network entity 304, 504. The functions, acts or tasks illustrated in the figures or described may be performed by the programmed processor 602 for executing the instructions stored in the memory 604. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing, and the like.

FIG. 7 illustrates exemplary diagram of the configuration of a user equipment (UE) according to an embodiment of the present disclosure. The UE shown in FIG. 7 may be similar to the UE 302 depicted in FIG. 3 and the UE 502 depicted in FIG. 5, in that, the functionalities and methods related to the UEs 302, 502 as detailed with respect to FIGS. 1-5 above, may be performed by the UE shown in FIG. 7.

Referring to FIG. 7, the UE 302, 502 may include at least one processor 702, a communication unit 706 (e.g., communicator or communication interface), and a memory 704 (e.g., storage). By way of example, the UE 302, 502 may be a User Equipment, such as a cellular phone or other device that communicates over a plurality of cellular networks (such as a 3G, 4G, a 5G or pre-5G, 6G network or any future wireless communication network). The communication unit 706 may perform functions for transmitting and receiving signals via a wireless channel.

As an example, the processor 702 may be a single processing unit or a number of units, all of which could include multiple computing units. The processor 702 may be implemented as one or more microprocessors, microcomputers, microcontrollers, digital signal processors, central processing units, state machines, logic circuitries, and/or any devices that manipulate signals based on operational instructions. Among other capabilities, the processor 702 is configured to fetch and execute computer-readable instructions and data stored in the memory. The processor 702 may include one or a plurality of processors. At this time, one or a plurality of processors 702 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 702 may control the processing of the input data in accordance with a predefined operating rule or artificial intelligence (AI) model stored in the non-volatile memory and the volatile memory, i.e., memory 704. The predefined operating rule or artificial intelligence model is provided through training or learning.

The memory 704 may include, but not limited to, a non-transitory computer-readable storage media, such as, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

In one example, the memory 704 may include a cache or random-access memory for the processor 702. The memory 704 may further include a database to store data. In some embodiments, the memory 704 may include one or more modules comprising a set of instructions that may be executed to cause the UE 302, 502 to perform any one or more of the methods/processes disclosed herein. The one or more modules may be configured to perform the steps of the present disclosure using the data stored in the database, to communicate with the secondary devices, as discussed herein. In an embodiment, each of the one or more modules may be a hardware unit which may be outside the memory 704. Hereinafter, it is understood that terms including "module" may correspond to a unit for processing performing at least one function or operation or method steps as discussed throughout the present disclosure. Further, the "module" may be implemented in hardware, software, or a combination of hardware and software.

In some embodiments, the memory 704 may be communicatively coupled to the at least one processor (or a controller) 702. The memory 704 may be configured to store data, instructions executable by the at least one processor 702. In one embodiment, the memory 704 may communicate via a bus within the UE 302, 502. The functions, acts or tasks illustrated in the figures or described may be performed by the programmed processor 702 for executing the instructions stored in the memory 704. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing, and the like.

Further, the solutions proposed herein can be used in any order and in any combination. Unless otherwise defined, all technical and scientific terms used herein have the same meaning as commonly understood by one of ordinary skilled in the art to which this disclosure belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

Although the present disclosure has been described with various embodiments, various changes and modifications may be suggested to one skilled in the art. It is intended that the present disclosure encompass such changes and modifications as fall within the scope of the appended claims.

## Claims

1. A method of a user equipment, UE, in a wireless communication system, the method comprising:
receiving (102), by a UE non-access stratum, UE NAS, layer from a network entity, a back-off timer related to non-initiation of a packet data unit, PDU, session associated with an application within the UE;
establishing (104) the PDU session associated with the application before the back-off timer is expired; and
in case that an expiry of the back-off timer is indicated (106) by the UE NAS layer, re-evaluating (108) one or more UE route selection policy, URSP, rules to determine whether a change of association of the established PDU session with the application is required.

2. The method as claimed in claim 1, wherein establishing the PDU session associated with the application comprises:
receiving application information related to the application within the UE for which the associated PDU session is to be established with the network entity; and
evaluating the one or more URSP rules to determine a first URSP rule for initiating the PDU session associated with the application, wherein each of the one or more URSP rules comprises one or more traffic descriptors, TDs, one or more route selection descriptors, RSDs, with an associated precedence value and wherein the one or more URSP rules are evaluated in an increasing order of the associated precedence value.

3. The method as claimed in claim 2, comprising:
upon determining the first URSP rule, transmitting, to the network entity, a PDU session establishment request based on a first RSD of the first URSP rule;
receiving a PDU session reject indication from the network entity; and
transmitting, to the network entity, another PDU session establishment request based on an availability of at least one second RSD of the first URSP rule.

4. The method as claimed in claim 3, wherein the first RSD includes a lower precedence value compared to each of the at least one second RSD, and
wherein the PDU session is established based on the at least one second RSD of the first URSP rule.

5. The method as claimed in claim 1, wherein the back-off timer comprises one of T3396, T3584, or T3585.

6. The method as claimed in claim 2, wherein the one or more URSP rules are configured by an operator associated with the network entity,
wherein each of the one or more URSP rules is associated with a precedence value, and
wherein evaluating the one or more URSP rules to determine the first URSP rule comprises performing a selection process including:
selecting one URSP rule from the one or more URSP rules based on the precedence value,
comparing the one or more application information with a TD of the selected one URSP rule,
upon determining that the TD of the selected one URSP rule matches with the application information, determining the selected one URSP rule as the first URSP rule, and
upon determining that the TD of the selected one URSP rule does not match with the application information, repeating the selection process with remaining of the one or more URSP rules in an increasing order of the precedence value.

7. A user equipment, UE, in a wireless communication system, the UE comprising:
a communication circuit; and
at least one processor coupled to the communication circuit, the at least one processor configured to:
receive (102), by a user equipment non-access stratum, UE NAS, layer, from a network entity, a back-off timer related to non-initiation of a packet data unit, PDU, session associated with an application within the UE,
establish (104) the PDU session associated with the application before the back-off timer is expired, and
in case that an expiry of the back-off timer is indicated (106) by the UE NAS layer, re-evaluate (108) one or more UE route selection policy, URSP, rules to determine whether a change of association of the established PDU session with the application is required.

8. The UE as claimed in claim 7, wherein, to initiate the PDU session associated with the application, the at least one processor is further configured to:
receive application information related to the application within the UE for which the associated PDU session is to be established with the network entity; and
evaluate the one or more URSP rules to determine a first URSP rule for initiating the PDU session associated with the application, wherein each of the one or more URSP rules comprises one or more traffic descriptors, TDs, one or more route selection descriptors, RSDs, with an associated precedence value and wherein the one or more URSP rules are evaluated in an increasing order of the associated precedence value.

9. The UE as claimed in claim 8, wherein the at least one processor is further configured to:
upon determining the first URSP rule, transmit, to the network entity, a PDU session establishment request based on a first RSD of the first URSP rule,
receive a PDU session reject indication from the network entity, and
transmit, to the network entity, another PDU session establishment request based on an availability of at least one second RSD of the first URSP rule.

10. The UE as claimed in claim 9, wherein the first RSD includes a lower precedence value compared to each of the at least one second RSD, and
wherein the PDU session is established based on the at least one second RSD of the first URSP rule.

11. The UE as claimed in claim 7, wherein the back-off timer comprises one of T3396, T3584, or T3585.

12. The UE as claimed in claim 8, wherein the one or more URSP rules are configured by an operator associated with the network entity,
wherein each of the one or more URSP rules is associated with a precedence value, and
wherein to evaluate the one or more URSP rules to determine the first URSP rule, the at least one processor is configured to perform a selection process including:
selecting one URSP rule from the one or more URSP rules based on the precedence value,
comparing the one or more application information with a TD of the selected one URSP rule,
upon determining that the TD of the selected one URSP rule matches with the application information, determining the selected one URSP rule as the first URSP rule, and
upon determining that the TD of the selected one URSP rule does not match with the application information, repeating the selection process with remaining of the one or more URSP rules in an increasing order of the precedence value.

## Patentansprüche

1. Verfahren eines Benutzergeräts, UE, in einem drahtlosen Kommunikationssystem, wobei das Verfahren Folgendes umfasst:
Empfangen (102), durch eine UE-Nicht-Zugriffsschicht, UE NAS, von einer Netzwerkeinheit, eines Back-Off Timers in Bezug auf die Nicht-Initiation einer Paketdateneinheits-, PDU-,Sitzung, die einer Anwendung innerhalb des UE zugeordnet ist;
Aufbauen (104) der der Anwendung zugeordneten PDU-Sitzung vor Ablauf des Back-Off Timers; und
im Falle, dass ein Ablauf des Back-off Timers von der UE NAS-Schicht angezeigt (106) wird, Neubewerten (108) einer oder mehrerer UE-Routenauswahlrichtlinien-, URSP-,Regeln, um zu bestimmen, ob eine Änderung der Zuordnung der aufgebauten PDU-Sitzung zur Anwendung erforderlich ist.

2. Verfahren nach Anspruch 1, wobei das Aufbauen der der Anwendung zugeordneten PDU-Sitzung Folgendes umfasst:
Empfangen von Anwendungsinformationen, die sich auf die Anwendung innerhalb des UE beziehen, für das die zugehörige PDU-Sitzung mit der Netzwerkeinheit aufgebaut werden soll; und
Auswerten der einen oder mehreren URSP-Regeln, um eine erste URSP-Regel zum Initiieren der PDU-Sitzung, die der Anwendung zugeordnet ist, zu bestimmen, wobei jede der einen oder der mehreren URSP-Regeln einen oder mehrere Verkehrsdeskriptoren, TDs, einen oder mehrere Routenauswahldeskriptoren, RSDs, mit einem zugehörigen Prioritätswert umfasst und wobei die eine oder die mehreren URSP-Regeln in einer aufsteigenden Reihenfolge des zugehörigen Prioritätswertes ausgewertet werden.

3. Verfahren nach Anspruch 2, umfassend:
nach dem Bestimmen der ersten URSP-Regel, Übertragen einer PDU-Sitzungsaufbauanforderung an die Netzwerkeinheit basierend auf einem ersten RSD der ersten URSP-Regel;
Empfangen einer PDU-Sitzungsablehnungsanzeige von der Netzwerkeinheit; und
Übertragen einer weiteren PDU-Sitzungsaufbauanforderung an die Netzwerkeinheit basierend auf einer Verfügbarkeit von mindestens einem zweiten RSD der ersten URSP-Regel.

4. Verfahren nach Anspruch 3, wobei der erste RSD einen niedrigeren Prioritätswert im Vergleich zu jeder des mindestens einen zweiten RSD beinhaltet, und
wobei die PDU-Sitzung basierend auf dem mindestens einen zweiten RSD der ersten URSP-Regel aufgebaut wird.

5. Verfahren nach Anspruch 1, wobei der Back-Off Timer eines von T3396, T3584 oder T3585 umfasst.

6. Verfahren nach Anspruch 2, wobei die eine oder die mehreren URSP-Regeln von einem der Netzwerkeinheit zugeordneten Betreiber konfiguriert werden,
wobei jede der einen oder mehreren URSP-Regeln einem Prioritätswert zugeordnet ist, und
wobei das Auswerten der einen oder mehreren URSP-Regeln, um die erste URSP-Regel zu bestimmen, die Durchführung eines Auswahlprozesses beinhaltet, Folgendes umfassend:
Auswählen einer URSP-Regel aus der einen oder den mehreren URSP-Regeln basierend auf dem Prioritätswert,
Vergleichen der einen oder mehreren Anwendungsinformationen mit einem TD der ausgewählten einen URSP-Regel,
nach dem Bestimmen, dass der TD der ausgewählten einen URSP-Regel mit der Anwendungsinformation übereinstimmt, Bestimmen der ausgewählten einen URSP-Regel als die erste URSP-Regel, und
nach dem Bestimmen, dass der TD der ausgewählten einen URSP-Regel nicht mit der Anwendungsinformation übereinstimmt, Wiederholen des Auswahlprozesses mit den verbleibenden der einen oder mehreren URSP-Regeln in einer aufsteigenden Reihenfolge des Prioritätswertes.

7. Benutzergerät, UE, in einem drahtlosen Kommunikationssystem, wobei das UE umfasst:
eine Kommunikationsschaltung; und
mindestens einen mit der Kommunikationsschaltung gekoppelten Prozessor, wobei der mindestens eine Prozessor konfiguriert ist zum:
Empfangen (102), durch eine Benutzergerät-Nicht-Zugriffsschicht, UE NAS, von einer Netzwerkeinheit, eines Back-Off Timers in Bezug auf die Nicht-Initiation einer Paketdateneinheits-, PDU-,Sitzung, die einer Anwendung innerhalb des UE zugeordnet ist,
Aufbauen (104) der der Anwendung zugeordneten PDU-Sitzung vor Ablauf des Back-Off Timers, und
im Falle, dass ein Ablauf des Back-off Timers von der UE NAS-Schicht angezeigt (106) wird, Neubewerten (108) einer oder mehrerer UE-Routenauswahlrichtlinien-, URSP-,Regeln, um zu bestimmen, ob eine Änderung der Zuordnung der aufgebauten PDU-Sitzung zur Anwendung erforderlich ist.

8. UE nach Anspruch 7, wobei zum Initiieren der der Anwendung zugeordneten PDU-Sitzung der mindestens eine Prozessor ferner konfiguriert ist zum:
Empfangen von Anwendungsinformationen, die sich auf die Anwendung innerhalb des UE beziehen, für das die zugehörige PDU-Sitzung mit der Netzwerkeinheit aufgebaut werden soll; und
Auswerten der einen oder mehreren URSP-Regeln, um eine erste URSP-Regel zum Initiieren der PDU-Sitzung, die der Anwendung zugeordnet ist, zu bestimmen, wobei jede der einen oder der mehreren URSP-Regeln einen oder mehrere Verkehrsdeskriptoren, TDs, einen oder mehrere Routenauswahldeskriptoren, RSDs, mit einem zugehörigen Prioritätswert umfasst und wobei die eine oder die mehreren URSP-Regeln in einer aufsteigenden Reihenfolge des zugehörigen Prioritätswertes ausgewertet werden.

9. UE nach Anspruch 8, wobei der mindestens eine Prozessor ferner konfiguriert ist zum:
nach dem Bestimmen der ersten URSP-Regel, Übertragen einer PDU-Sitzungsaufbauanforderung an die Netzwerkeinheit basierend auf einem ersten RSD der ersten URSP-Regel,
Empfangen einer PDU-Sitzungsablehnungsanzeige von der Netzwerkeinheit, und
Übertragen einer weiteren PDU-Sitzungsaufbauanforderung an die Netzwerkeinheit basierend auf einer Verfügbarkeit von mindestens einem zweiten RSD der ersten URSP-Regel.

10. UE nach Anspruch 9, wobei der erste RSD einen niedrigeren Prioritätswert im Vergleich zu jeder des mindestens einen zweiten RSD beinhaltet, und
wobei die PDU-Sitzung basierend auf dem mindestens einen zweiten RSD der ersten URSP-Regel aufgebaut wird.

11. UE nach Anspruch 7, wobei der Back-Off Timer eines von T3396, T3584 oder T3585 umfasst.

12. UE nach Anspruch 8, wobei die eine oder die mehreren URSP-Regeln von einem der Netzwerkeinheit zugeordneten Betreiber konfiguriert werden,
wobei jede der einen oder mehreren URSP-Regeln einem Prioritätswert zugeordnet ist, und
wobei zur Auswertung der einen oder mehreren URSP-Regeln, um die erste URSP-Regel zu bestimmen, der mindestens eine Prozessor konfiguriert ist, um einen Auswahlprozess durchzuführen, der Folgendes umfasst:
Auswählen einer URSP-Regel aus der einen oder den mehreren URSP-Regeln basierend auf dem Prioritätswert,
Vergleichen der einen oder mehreren Anwendungsinformationen mit einem TD der ausgewählten einen URSP-Regel,
nach dem Bestimmen, dass der TD der ausgewählten einen URSP-Regel mit der Anwendungsinformation übereinstimmt, Bestimmen der ausgewählten einen URSP-Regel als die erste URSP-Regel, und
nach dem Bestimmen, dass der TD der ausgewählten einen URSP-Regel nicht mit der Anwendungsinformation übereinstimmt, Wiederholen des Auswahlprozesses mit den verbleibenden der einen oder mehreren URSP-Regeln in einer aufsteigenden Reihenfolge des Prioritätswertes.

## Revendications

1. Procédé d'un équipement utilisateur, UE, dans un système de communication sans fil, le procédé comprenant :
recevoir (102), par une couche de strate de non-accès d'UE, couche NAS UE, d'une entité de réseau, d'un temporisateur de délai d'attente lié à la non-initiation d'une session d'unité de données par paquets, PDU, associée à une application au sein de l'UE ;
établir (104) la session PDU associée à l'application avant l'expiration du temporisateur de délai d'attente ; et
dans le cas où une expiration du temporisateur de délai d'attente est indiquée (106) par la couche NAS UE, réévaluer (108) une ou plusieurs règles de politique de sélection de route d'UE, URSP, pour déterminer si un changement d'association de la session PDU établie avec l'application est nécessaire.

2. Procédé de la revendication 1, dans lequel l'établissement de la session PDU associée à l'application comprend :
recevoir des informations d'application relatives à l'application au sein de l'UE pour lequel la session PDU associée doit être établie avec l'entité de réseau ; et
évaluer la ou les règles URSP afin de déterminer une première règle URSP pour initier la session PDU associée à l'application, chacune de l'une ou des plusieurs règles URSP comprenant un ou plusieurs descripteurs de trafic, TDs, un ou plusieurs descripteurs de sélection de route, RSDs, avec une valeur de priorité associée et la ou les règles URSP étant évaluées dans un ordre croissant de la valeur de priorité associée.

3. Procédé de la revendication 2, comprenant :
après avoir déterminé la première règle URSP, transmettre, à l'entité de réseau, une demande d'établissement de session PDU basée sur un premier RSD de la première règle URSP ;
recevoir une indication de rejet de session PDU de la part de l'entité de réseau ; et
transmettre, à l'entité de réseau, une autre demande d'établissement de session PDU basée sur la disponibilité d'au moins un second RSD de la première règle URSP.

4. Procédé de la revendication 3, dans lequel le premier RSD comprend une valeur de priorité inférieure par rapport à chacun de l'au moins un second RSD, et
dans lequel la session PDU est établie sur la base de l'au moins un second RSD de la première règle URSP.

5. Procédé de la revendication 1, dans lequel le temporisateur de délai d'attente comprend l'un de T3396, de T3584 ou de T3585.

6. Procédé de la revendication 2, dans lequel une ou plusieurs règles URSP sont configurées par un opérateur associé à l'entité de réseau,
dans lequel chacune de l'une ou des plusieurs règles URSP est associée à une valeur de priorité, et
dans lequel l'évaluation de la ou des règles URSP pour déterminer la première règle URSP comprend l'exécution d'un processus de sélection comprenant :
sélectionner une règle URSP parmi la ou les règles URSP en se basant sur la valeur de précédence,
comparer la ou les informations d'application avec un TD de la règle URSP sélectionnée,
après avoir déterminé que le TD de la règle URSP sélectionnée correspond aux informations d'application, déterminer que la règle URSP sélectionnée est la première règle URSP, et
après avoir déterminé que le TD de la règle URSP sélectionnée ne correspond pas aux informations d'application, répéter le processus de sélection avec les restantes de l'une ou des plusieurs règles URSP dans un ordre croissant de la valeur de priorité.

7. Équipement utilisateur, UE, dans un système de communication sans fil, l'UE comprenant :
un circuit de communication ; et
au moins un processeur couplé au circuit de communication, l'au moins un processeur étant configuré pour :
recevoir (102), par une couche de strate de non-accès d'équipement utilisateur, couche NAS UE, d'une entité de réseau, d'un temporisateur de délai d'attente lié à la non-initiation d'une session d'unité de données par paquets, PDU, associée à une application au sein de l'UE,
établir (104) la session PDU associée à l'application avant l'expiration du temporisateur de délai d'attente, et
dans le cas où une expiration du temporisateur de délai d'attente est indiquée (106) par la couche NAS UE, réévaluer (108) une ou plusieurs règles de politique de sélection de route d'UE, URSP, pour déterminer si un changement d'association de la session PDU établie avec l'application est nécessaire.

8. UE de la revendication 7, dans lequel, pour initier la session PDU associée à l'application, l'au moins un processeur est en outre configuré pour :
recevoir des informations d'application relatives à l'application au sein de l'UE pour lequel la session PDU associée doit être établie avec l'entité de réseau ; et
évaluer la ou les règles URSP afin de déterminer une première règle URSP pour initier la session PDU associée à l'application, chacune de l'une ou des plusieurs règles URSP comprenant un ou plusieurs descripteurs de trafic, TDs, un ou plusieurs descripteurs de sélection de route, RSDs, avec une valeur de priorité associée et la ou les règles URSP étant évaluées dans un ordre croissant de la valeur de priorité associée.

9. UE de la revendication 8, dans lequel l'au moins un processeur est en outre configuré pour :
après avoir déterminé la première règle URSP, transmettre, à l'entité de réseau, une demande d'établissement de session PDU basée sur un premier RSD de la première règle URSP,
recevoir une indication de rejet de session PDU de la part de l'entité de réseau, et
transmettre, à l'entité de réseau, une autre demande d'établissement de session PDU basée sur la disponibilité d'au moins un second RSD de la première règle URSP.

10. UE de la revendication 9, dans lequel le premier RSD comprend une valeur de priorité inférieure par rapport à chacun de l'au moins un second RSD, et
dans lequel la session PDU est établie sur la base de l'au moins un second RSD de la première règle URSP.

11. UE de la revendication 7, dans lequel le temporisateur de délai d'attente comprend l'un de T3396, de T3584 ou de T3585.

12. UE de la revendication 8, dans lequel une ou plusieurs règles URSP sont configurées par un opérateur associé à l'entité de réseau,
dans lequel chacune de l'une ou des plusieurs règles URSP est associée à une valeur de priorité, et
dans lequel, pour évaluer la ou les règles URSP afin de déterminer la première règle URSP, l'au moins un processeur est configuré pour effectuer un processus de sélection comprenant :
sélectionner une règle URSP parmi la ou les règles URSP en se basant sur la valeur de précédence,
comparer la ou les informations d'application avec un TD de la règle URSP sélectionnée,
après avoir déterminé que le TD de la règle URSP sélectionnée correspond aux informations d'application, déterminer que la règle URSP sélectionnée est la première règle URSP, et
après avoir déterminé que le TD de la règle URSP sélectionnée ne correspond pas aux informations d'application, répéter le processus de sélection avec les restantes de l'une ou des plusieurs règles URSP dans un ordre croissant de la valeur de priorité.
